# EUROPÄISCHE PATENTSCHRIFT

(11) **EP 3 238 990 B1**
(45) Veröffentlichungstag und Bekanntmachung des Hinweises auf die Patenterteilung: **27.02.2019**
(21) Anmeldenummer: 17167047.4
(22) Anmeldetag: 19.04.2017
(51) Int. Cl.: B60P 3/079

(54) **ZURRANKER UND VERWENDUNG EINES ZURRANKERS**
LASHING ANCHOR AND USE OF A LASHING ANCHOR
PONTET D'AMARRAGE ET SON UTILISATION

(30) Priorität: 29.04.2016 AT 503952016
(43) Veröffentlichungstag der Anmeldung: 01.11.2017
(73) Patentinhaber: Kässbohrer Transport Technik GmbH, 5301 Eugendorf (AT)
(72) Erfinder: MADEREGGER, Gustav, 5221 Lochen am See (AT)
(74) Vertreter: Torggler & Hofinger Patentanwälte

(56) Entgegenhaltungen:
- DE-A1-102012 103 815
- DE-U- 6 941 229
- JP-A- H1 037 941
- JP-A- 2001 027 219
- US-A- 3 853 347
- US-A- 4 960 353

## Beschreibung

Die vorliegende Erfindung betrifft einen Zurranker mit den Merkmalen des Oberbegriffs von Anspruch 1 sowie die Verwendung eines derartigen Zurrankers zum Verankern eines Zurrmittels an einer Verankerungsöffnung, die in einem Lochblech einer Ladefläche eines Nutzfahrzeugs ausgebildet ist.

Zurranker zum Verankern eines Zurrmittels an einer Ladefläche eines Nutzfahrzeugs sind bereits bekannt (z.B. US 3,853,347 oder US 4,960,353). Zum Befestigen von Ladegut auf der Ladefläche eines Nutzfahrzeugs sind insbesondere für jene Fälle, in denen die Ladefläche ein Lochblech umfasst, hakenförmige Zurranker mit daran befestigten Zurrmitteln bekannt. Die Löcher des Lochblechs bilden Verankerungsöffnungen, in die der Zurranker eingreifen kann. Ein hakenförmiges Verankerungselement des Zurrankers hintergreift die Umrandung der für die Verankerung gewählten Verankerungsöffnung und verankert das Zurrmittel bei Zugbelastung in oder an der Verankerungsöffnung. Die am Zurrmittel angreifenden Zugkräfte werden dabei über das hakenförmige Verankerungselement und insbesondere über die Hakenspitze im Wesentlichen punktförmig in das die Verankerungsöffnung umgebende Blech eingeleitet.

Bei bekannten Zurrankern sind der Zurranschlag zum Befestigen des Zurrmittels am Zurranker und das hakenförmige Verankerungselement zumeist fest miteinander verbunden oder über ein Drehgelenk um eine Drehachse relativ zueinander verdrehbar miteinander verbunden (vgl. US 8,439,610 B2). Damit sind aus unterschiedlichen Richtungen am verankerten Zurranker angreifende Zugkräfte nur in einem begrenzten Ausmaß effizient in das die Verankerungsöffnung umgebende Blech einleitbar. Bei einer ungünstigen Zugrichtung kann es zu einer ungewünschten plastischen Verformung des Bleches kommen.

Aufgabe der Erfindung ist es, eine plastische Verformung des Bleches besser als beim Stand der Technik zu vermeiden.

Diese Aufgabe wird durch einen Zurranker mit den Merkmalen des Anspruchs 1 sowie durch eine Verwendung eines derartigen Zurrankers gelöst. Vorteilhafte Ausführungsformen der Erfindung sind in den abhängigen Ansprüchen definiert.

Die Erfindung bewirkt für beliebige Zugrichtungen eine gleichmäßigere Krafteinleitung in das die Verankerungsöffnung umgebende Blech, indem einerseits der Zurranker einen Anschlag mit einer flächenförmigen Anschlagfläche aufweist und andererseits mit einem zumindest zweiachsigen Gelenk ausgestattet ist. Das Vorsehen einer flächenförmigen Anschlagfläche verhindert die punktförmige Einleitung von am Zurranker angreifenden Zugkräften in das die Verankerungsöffnung umgebende Material. Bei dünnen Lochblechen kann damit eine unerwünschte Ausbeulung des Blechs vermieden werden, wie es mit herkömmlichen Zurrankern mit im Wesentlichen punktförmigen Anschlagflächen an deren Hakenspitzen auftreten kann.

Es kann vorgesehen sein, dass das Gelenk als Kugelgelenk ausgebildet ist. Durch die Ausbildung des Gelenks als Kugelgelenk kann der Zurranschlag bzw. das mit dem Zurranschlag verbundene Zurrmittel eine Vielzahl von unterschiedlichen Positionen relativ zum hakenförmigen Verankerungselement einnehmen, ohne auf die Positionierung des hakenförmigen Verankerungselements einzuwirken. Dadurch können die an einem in einer Verankerungsöffnung verankerten Zurranker angreifenden Zugkräfte unabhängig von der Zugrichtung (Richtung der Zugkraft) und damit unabhängig von der Stellung des Zurranschlags relativ zum hakenförmigen Verankerungselement optimal in den die Verankerungsöffnung umgebenden Bereich eingeleitet werden.

Gemäß einer besonders bevorzugten Ausführungsform kann vorgesehen sein, dass das Kugelgelenk einen Gelenkkopf umfasst, wobei der Gelenkkopf einstückig mit dem hakenförmigen Verankerungselement ausgebildet ist. Insbesondere kann vorgesehen sein, dass das hakenförmige Verankerungselement und der Gelenkkopf einstückig aus Schmiedeeisen gefertigt sind. Die mit dem Gelenkkopf korrespondierende Gelenkpfanne ist vorzugsweise am Zurranschlag oder im Bereich des Zurranschlags angeordnet.

Es kann vorgesehen sein, dass der Anschlag an einem Ende des bogenförmigen Abschnitts angeordnet ist.

Es ist vorgesehen, dass der Anschlag eine Längserstreckung aufweist, wobei die Längserstreckung im Wesentlichen quer zum bogenförmigen Abschnitt verläuft, wobei der Anschlag entlang seiner Längserstreckung den bogenförmigen Abschnitt überragt.

Es kann vorgesehen sein, dass die Anschlagfläche bombiert ausgebildet ist.

Hinsichtlich der Verwendung eines vorgeschlagenen Zuganker kann vorgesehen sein, dass zum Verankern des Zurrmittels an der Verankerungsöffnung der Zurranker soweit in die Verankerungsöffnung eingeführt wird, dass der Anschlag einen Rand der Verankerungsöffnung hintergreift. Dabei kann vorgesehen sein, dass die Verankerungsöffnung als Langloch ausgebildet ist und die Längserstreckung des Anschlags im Wesentlichen einer Längserstreckung des Langlochs der Verankerungsöffnung entspricht.

Weitere Vorteile und Einzelheiten der Erfindung werden anhand der Figuren erläutert. Es zeigen:
- Fig. 1a bis 1i: eine erste Verwendung und
- Fig. 2a, 2b: eine zweite Verwendung.

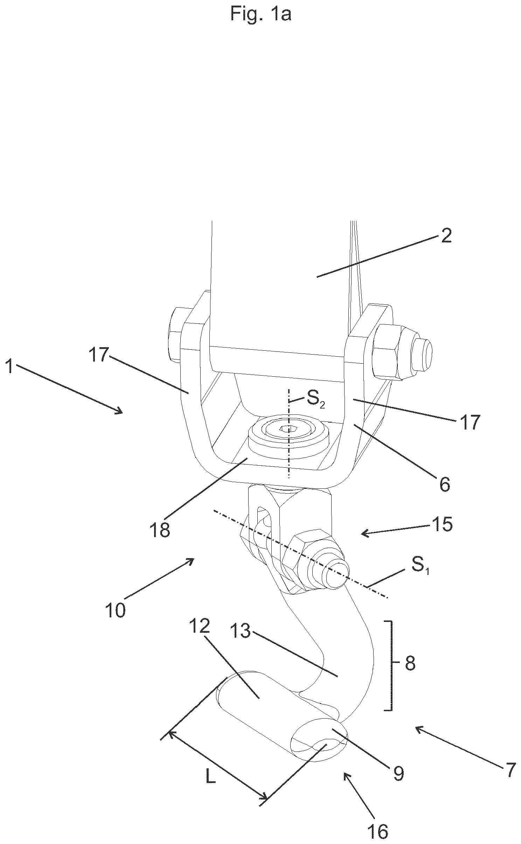

Fig. 1a zeigt einen Zurranker 1. Dieser umfasst ein hakenförmiges Verankerungselement 7 und einen Zurranschlag 6, an dem ein Zurrmittel 2 angebracht ist. Über ein zweiachsiges Gelenk 10 ist das hakenförmige Verankerungselement 7 mit dem Zurranschlag 6 gelenkig verbunden. Das hakenförmige Verankerungselement 7 weist einen bogenförmigen Abschnitt 8 und einen Anschlag 9 mit einer flächenförmigen Anschlagfläche 12 auf, die in diesem Beispiel bombiert ausgebildet ist.

Der Anschlag 9 ist an einem Ende des bogenförmigen Abschnitts 8 angeordnet und weist eine Längserstreckung L auf, die quer zum bogenförmigen Abschnitt 8 verläuft. Der Anschlag 9 überragt entlang seiner Längserstreckung L den bogenförmigen Abschnitt 8.

Das Gelenk 10 ist in diesem Ausführungsbeispiel zweiachsig ausgebildet, mit einer ersten Schwenkachse S₁ und einer zweiten Schwenkachse S₂. Die zwei Schwenkachsen S₁ und S₂ verlaufen orthogonal zueinander. Die erste Schwenkachse S₁ verläuft in einer ersten Richtung parallel zur Längserstreckung L des Anschlags 9. Die zweite Schwenkachse S₂ des Gelenks 10 verläuft in einer zweiten Richtung quer zur Längserstreckung L des Anschlags 9.

Die erste Schwenkachse S₁ verläuft durch einen ersten Endbereich 15 des hakenförmigen Verankerungselements 7. Der Anschlag 9 ist an einem zweiten Endbereich 16 des hakenförmigen Verankerungselements 7 angeordnet.

Der Zurranschlag 6 ist bügelförmig mit einem verschraubbaren Querbolzen ausgeführt. Am verschraubbaren Querbolzen ist das Zurrmittel 2 angebracht.

Der Zurranschlag 6 ist als im Wesentlichen U-förmiger Bügel mit zwei Seitenwänden 17 und einer Bodenfläche 18 ausgebildet. Die zweite Schwenkachse S₂ verläuft im Wesentlichen senkrecht zur Bodenfläche 18.

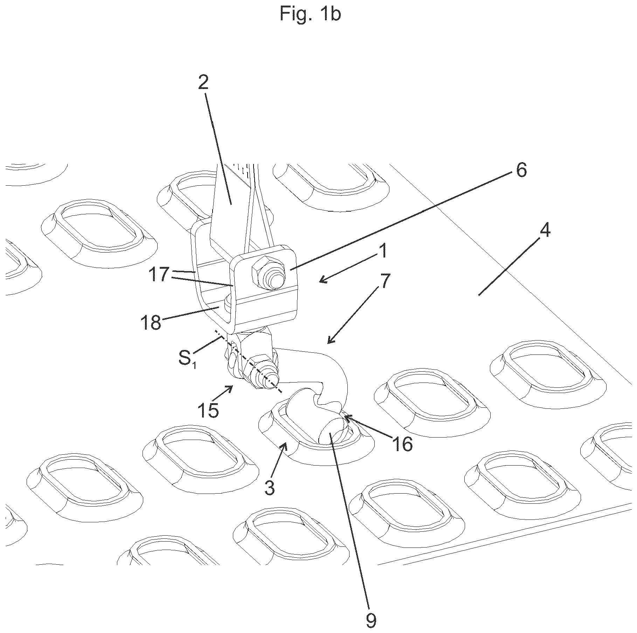

Fig. 1b zeigt den Zurranker 1 der Fig. 1a beim Einführen in eine Verankerungsöffnung 3, welche in einem Lochblech 4 ausgebildet ist. Die Verankerungsöffnung 3 ist als Langloch ausgebildet. Andere geometrische Formen sind möglich. Das Verankerungselement 7 ist um die erste Schwenkachse S₁ relativ zum Zurranschlag 6 verschwenkt, um ein Einführen des Anschlags 9 in die Verankerungsöffnung 3 zu erleichtern. Die Längserstreckung L des Anschlags 9 entspricht im Wesentlichen der Längserstreckung des Langlochs der Verankerungsöffnung 3.

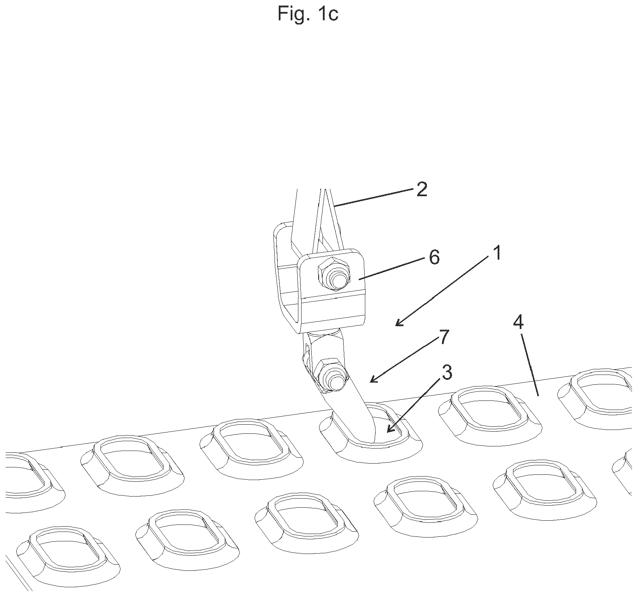

In Fig. 1c ist der Zurranker 1 soweit in die Verankerungsöffnung 3 eingeführt, dass der Anschlag 9 den Rand der Verankerungsöffnung 3 hintergreift.

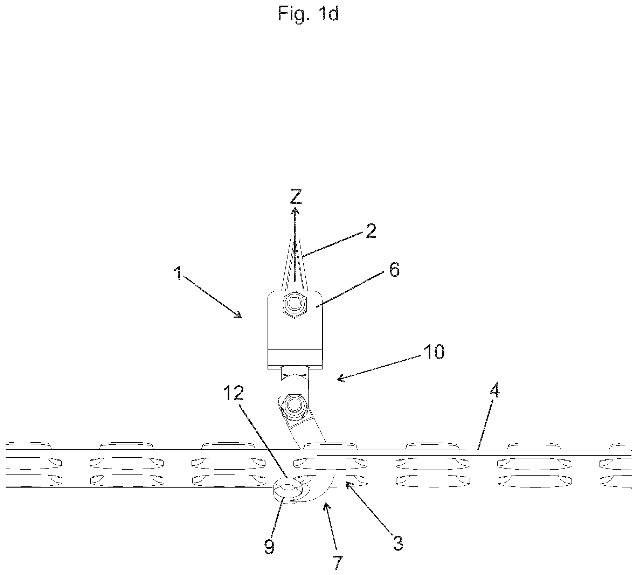

Fig. 1d zeigt eine perspektivische Ansicht von unten der in Fig. 1c dargestellten Situation. Die Anschlagfläche 12 des Anschlags 9 liegt an der Unterseite des Lochblechs 4 am Blech an. Eine in Zugrichtung Z am Zugmittel 2 angreifende Zugkraft wird bei dieser Ausrichtung des Zurrankers 1 in erster Linie über die Anschlagfläche 12 des Anschlags 9 in das Lochblech 4 eingebracht.

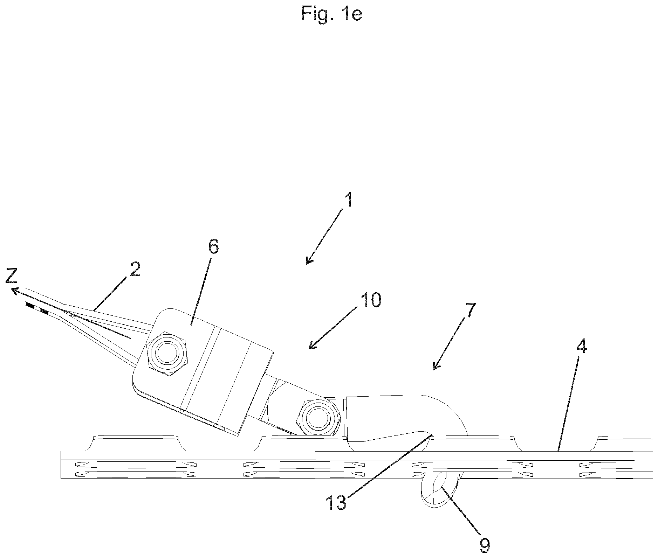

Fig. 1e zeigt den Zurranker 1 in einer zum Lochblech 4 annähernd waagrechten Ausrichtung, weil die Zugrichtung Z einer am Zugmittel 2 anliegenden Zugkraft eine entsprechende Ausrichtung bewirkt hat. Die Zugkraft wird bei dieser Ausrichtung des Zurrankers 1 in erster Linie über einen Hakengrund 13 des Verankerungselements 7 in das Lochblech 4 eingebracht.

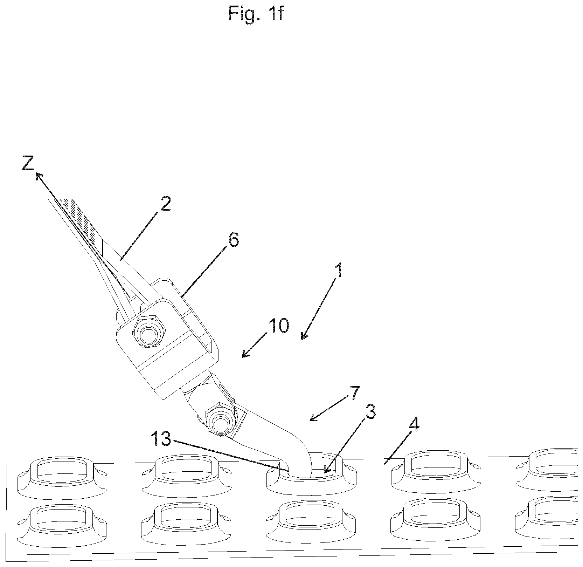

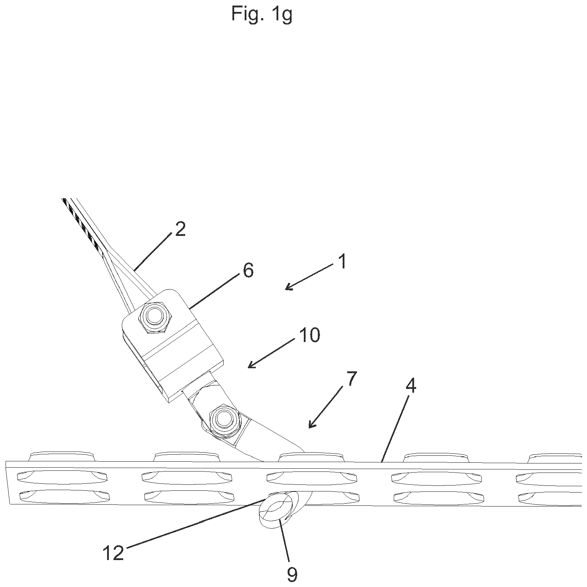

Fig. 1f zeigt den Zurranker 1 in einer zum Lochblech 4 mit annähernd 45° verlaufenden Ausrichtung, weil die Zugrichtung Z einer am Zugmittel 2 anliegenden Zugkraft eine entsprechende Ausrichtung bewirkt hat. Die Zugkraft wird bei dieser Ausrichtung des Zurrankers 1 sowohl über den Hakengrund 13 des Verankerungselements 7 als auch über die Anschlagfläche 12 des Anschlags 9 in das Lochblech 4 eingebracht. Die damit verbundene Anlage der Anlagefläche 12 an der Unterseite des Lochblechs 4 ist in Fig. 1g dargestellt.

In den Fig. 1c bis 1g verläuft die Zugrichtung Z im Wesentlichen quer zur Längserstreckung der als Langloch ausgebildeten Verankerungsöffnung 3.

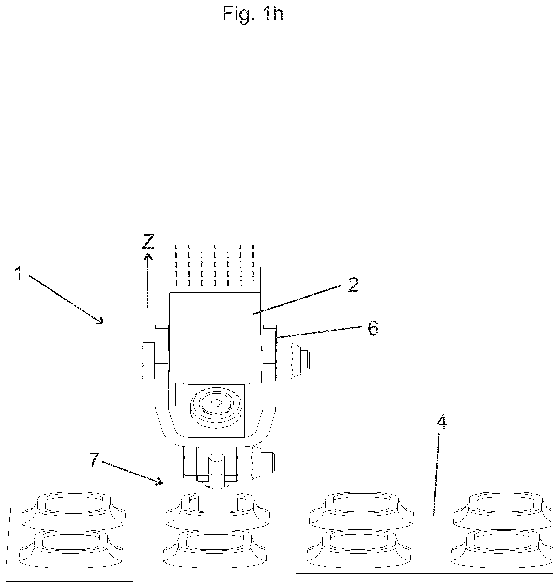

Fig. 1h zeigt eine Situation, in welcher die Zugrichtung Z im Wesentlichen in Längserstreckung der als Langloch ausgebildeten Verankerungsöffnung 3 verläuft. Das Verankerungselement 7 kann sich durch die Zugkraft ausrichten, weil der bogenförmige Abschnitt 8 schmäler ausgebildet ist als die Längserstreckung L des Anschlags 9 und im Wesentlichen einer Breite des Langlochs entspricht.

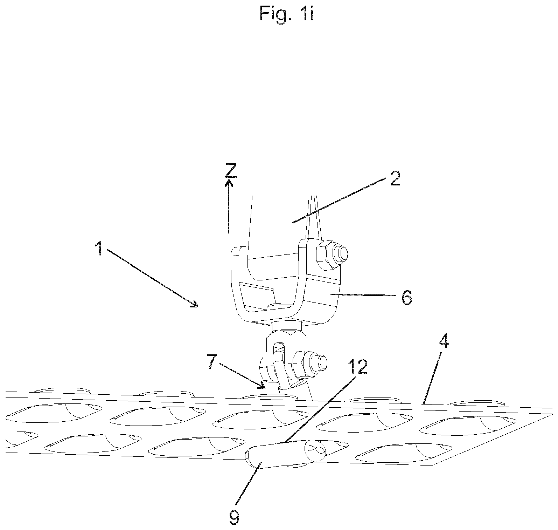

Fig. 1i zeigt eine perspektivische Ansicht von unten. Die Zugkraft wird bei dieser Ausrichtung des Zurrankers 1 sowohl über den in dieser Ansicht nicht sichtbaren Hakengrund 13 des Verankerungselements 7 als auch über die Anschlagfläche 12 des Anschlags 9 in das Lochblech 4 eingebracht.

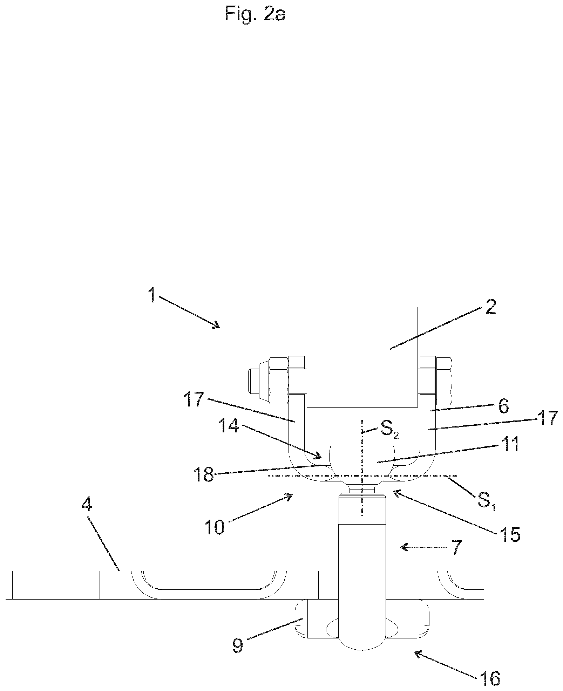

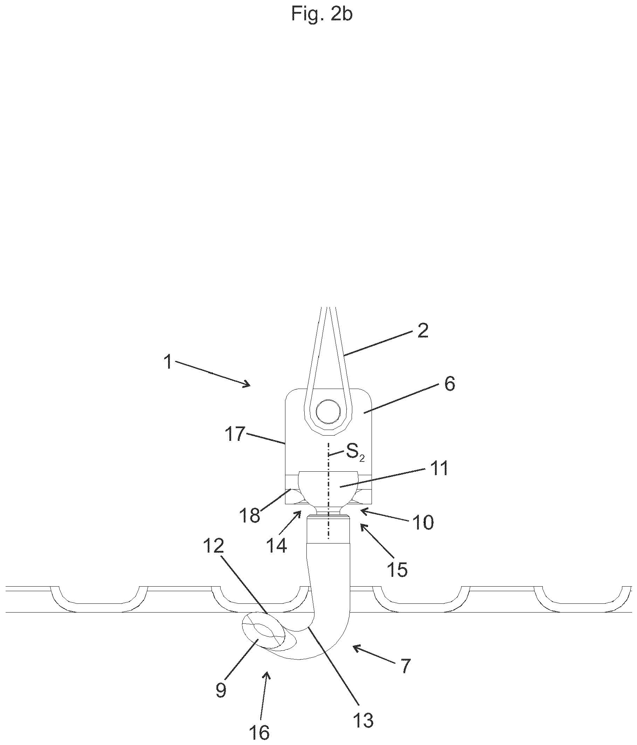

Fig. 2a und 2b zeigen eine weitere Verwendung mittels eines anders ausgebildeten Zurrankers 1. Im Unterschied zum Zurranker 1 der Fig. 1 ist hier das Gelenk 10 als Kugelgelenk ausgebildet. Der Gelenkkopf 11 ist einstückig mit dem Verankerungselement 7 ausgebildet. Eine Gelenkpfanne 14 ist am Zurranschlag 6 angeordnet.

Wie im Ausführungsbeispiel gemäß den Fig. 1a bis 1i umfasst das Gelenk 10 eine erste Schwenkachse S₁ und eine zweite Schwenkachse S₂, wobei die zwei Schwenkachsen S₁, S₂ orthogonal zueinander verlaufen. Die erste Schwenkachse S₁ verläuft in einer ersten Richtung parallel zur Längserstreckung L des Anschlags 9 und die zweite Schwenkachse S₂ verläuft in einer zweiten Richtung quer zur Längserstreckung L des Anschlags 9. Die erste Schwenkachse S₁ verläuft durch den ersten Endbereich 15 des hakenförmigen Verankerungselements 7. Der Zurranschlag 6 ist als im Wesentlichen U-förmiger Bügel mit zwei Seitenwänden 17 und einer Bodenfläche 18 ausgebildet. Die zweite Schwenkachse S₂ verläuft im Wesentlichen senkrecht zur Bodenfläche.

### Bezugszeichenliste:

- 1: Zurranker
- 2: Zurrmittel
- 3: Verankerungsöffnung
- 4: Lochblech
- 5: Nutzfahrzeug
- 6: Zurranschlag
- 7: Verankerungselement
- 8: bogenförmiger Abschnitt
- 9: Anschlag
- 10: Gelenk
- 11: Gelenkkopf
- 12: Anschlagfläche
- 13: Hakengrund
- 14: Gelenkpfanne
- 15: erster Endbereich des hakenförmigen Verankerungselements
- 16: zweiter Endbereich des hakenförmigen Verankerungselements
- 17: Seitenwand
- 18: Bodenfläche

- L: Längserstreckung des Anschlags
- Z: Zugrichtung
- S₁: erste Schwenkachse
- S₂: zweite Schwenkachse

## Patentansprüche

1. Zurranker (1) zum Verankern eines Zurrmittels (2) an einer Verankerungsöffnung (3), die in einem Lochblech (4) einer Ladefläche eines Nutzfahrzeugs (5) ausgebildet ist, wobei der Zurranker (1) aufweist:
- einen Zurranschlag (6), an dem das Zurrmittel (2), insbesondere ein Zugseil oder Zugband, befestigbar ist, wobei der Zurranschlag (6) bügelförmig ausgebildet ist,
- ein hakenförmiges Verankerungselement (7) zum Hintergreifen der Verankerungsöffnung (3), und
- ein zumindest zweiachsiges Gelenk (10), das den Zurranschlag (6) mit dem hakenförmigen Verankerungselement (7) um zumindest zwei Achsen gelenkig verbindet, wobei das zumindest zweiachsige Gelenk (10) eine erste Schwenkachse (S₁) und eine zweite Schwenkachse (S₂) aufweist, wobei die zwei Schwenkachsen (S₁, S₂) orthogonal zueinander verlaufen,
**dadurch gekennzeichnet, dass** das hakenförmige Verankerungselement (7) einen bogenförmigen Abschnitt (8) zum Hintergreifen der Verankerungsöffnung (3) und einen Anschlag (9) mit einer flächenförmigen Anschlagfläche (12) aufweist, wobei der Anschlag (9) eine Längserstreckung (L) aufweist, wobei die Längserstreckung (L) im Wesentlichen quer zum bogenförmigen Abschnitt (8) verläuft, wobei der Anschlag (9) entlang seiner Längserstreckung (L) den bogenförmigen Abschnitt (8) überragt, und der Zurranschlag (6) als im Wesentlichen U-förmiger Bügel mit zwei Seitenwänden (17) und einer Bodenfläche (18) ausgebildet ist, wobei die zweite Schwenkachse (S₂) im Wesentlichen senkrecht zur Bodenfläche (18) verläuft.

2. Zurranker nach Anspruch 1, **dadurch gekennzeichnet, dass** das Gelenk (10) als Kugelgelenk ausgebildet ist.

3. Zurranker nach Anspruch 1 oder 2, **dadurch gekennzeichnet, dass** das Gelenk (10) einen Gelenkkopf (11) umfasst, wobei der Gelenkkopf (11) einstückig mit dem hakenförmigen Verankerungselement (7) ausgebildet ist.

4. Zurranker nach wenigstens einem der Ansprüche 1 bis 3, **dadurch gekennzeichnet, dass** der Anschlag (9) an einem Ende des bogenförmigen Abschnitts (8) angeordnet ist.

5. Zurranker nach wenigstens einem der Ansprüche 1 bis 4, **dadurch gekennzeichnet, dass** die Anschlagfläche (12) bombiert ausgebildet ist.

6. Zurranker nach wenigstens einem der Ansprüche 1 bis 5, **dadurch gekennzeichnet, dass** die erste Schwenkachse (S₁) in einer ersten Richtung parallel zur Längserstreckung (L) des Anschlags (9) verläuft und die zweite Schwenkachse (S₂) in einer zweiten Richtung quer zur Längserstreckung (L) des Anschlags (9) verläuft.

7. Zurranker nach wenigstens einem der Ansprüche 1 bis 6, **dadurch gekennzeichnet, dass** die erste Schwenkachse (S₁) durch einen ersten Endbereich (15) des hakenförmigen Verankerungselements (7) verläuft.

8. Zurranker nach wenigstens einem der Ansprüche 1 bis 7, **dadurch gekennzeichnet, dass** der Anschlag (9) an einem zweiten Endbereich (16) des hakenförmigen Verankerungselements (7) angeordnet ist.

9. Verwendung eines Zurrankers (1) nach einem der Ansprüche 1 bis 8 zum Verankern eines Zurrmittels (2) an einer Verankerungsöffnung (3), die in einem Lochblech (4) einer Ladefläche eines Nutzfahrzeugs (5) ausgebildet ist.

10. Verwendung nach Anspruch 9, **dadurch gekennzeichnet, dass** zum Verankern des Zurrmittels (2) an der Verankerungsöffnung (3) der Zurranker (1) soweit in die Verankerungsöffnung (3) eingeführt wird, dass der Anschlag (9) einen Rand der Verankerungsöffnung (3) hintergreift.

11. Verwendung nach Anspruch 10, **dadurch gekennzeichnet, dass** die Verankerungsöffnung (3) als Langloch ausgebildet ist und die Längserstreckung (L) des Anschlags (9) im Wesentlichen einer Längserstreckung des Langlochs der Verankerungsöffnung (3) entspricht.

## Claims

1. Lashing anchor (1) for anchoring a lashing means (2) to an anchoring opening (3) which is formed in a perforated plate (4) of a load area of a commercial vehicle (5), wherein the lashing anchor (1) has:
- a lashing stop (6) to which the lashing means (2), in particular a pull rope or strap, can be fastened, wherein the lashing stop (6) is formed bracket-shaped,
- a hook-shaped anchoring element (7) for engaging behind the anchoring opening (3), and
- a joint (10) with at least two axes, which connects the lashing stop (6) to the hook-shaped anchoring element (7) articulated about at least two axes, wherein the joint (10) with at least two axes has a first pivot axis (S₁) and a second pivot axis (S₂), wherein the two pivot axes (S₁, S₂) run orthogonally with respect to each other,
**characterized in that** the hook-shaped anchoring element (7) has an arched section (8) for engaging behind the anchoring opening (3) and a stop (9) with a laminar stop surface (12), wherein the stop (9) has a longitudinal extent (L), wherein the longitudinal extent (L) runs substantially transverse to the arched section (8), wherein, along its longitudinal extent (L), the stop (9) projects beyond the arched section (8), and the lashing stop (6) is formed as a substantially U-shaped bracket with two side walls (17) and a bottom surface (18), wherein the second pivot axis (S₂) runs substantially perpendicular to the bottom surface (18).

2. Lashing anchor according to claim 1, **characterized in that** the joint (10) is formed as a ball joint.

3. Lashing anchor according to claim 1 or 2, **characterized in that** the joint (10) comprises a joint head (11), wherein the joint head (11) is formed in one piece with the hook-shaped anchoring element (7).

4. Lashing anchor according to at least one of claims 1 to 3, **characterized in that** the stop (9) is arranged at one end of the arched section (8).

5. Lashing anchor according to at least one of claims 1 to 4, **characterized in that** the stop surface (12) is formed convex.

6. Lashing anchor according to at least one of claims 1 to 5, **characterized in that** the first pivot axis (S₁) runs in a first direction parallel to the longitudinal extent (L) of the stop (9) and the second pivot axis (S₂) runs in a second direction transverse to the longitudinal extent (L) of the stop (9).

7. Lashing anchor according to at least one of claims 1 to 6, **characterized in that** the first pivot axis (S₁) runs through a first end area (15) of the hook-shaped anchoring element (7).

8. Lashing anchor according to at least one of claims 1 to 7, **characterized in that** the stop (9) is arranged in a second end area (16) of the hook-shaped anchoring element (7).

9. Use of a lashing anchor (1) according to one of claims 1 to 8 for anchoring a lashing means (2) to an anchoring opening (3) which is formed in a perforated plate (4) of a load area of a commercial vehicle (5).

10. Use according to claim 9, **characterized in that**, for anchoring the lashing means (2) to the anchoring opening (3), the lashing anchor (1) is inserted into the anchoring opening (3) until the stop (9) engages behind an edge of the anchoring opening (3).

11. Use according to claim 10, **characterized in that** the anchoring opening (3) is formed as an elongated hole and the longitudinal extent (L) of the stop (9) substantially corresponds to a longitudinal extent of the elongated hole of the anchoring opening (3).

## Revendications

1. Attache d'arrimage (1) pour ancrer un moyen d'arrimage (2) à une ouverture d'ancrage (3), qui est conçue dans une tôle perforée (4) d'une surface de chargement d'un véhicule utilitaire (5), l'attache d'arrimage (1) présentant :
- une butée d'arrimage (6), à laquelle peut être fixé le moyen d'arrimage (2), plus particulièrement un câble de traction ou une bande de traction, la butée d'arrimage (6) étant conçue en forme d'étrier,
- un élément d'ancrage (7) en forme de crochet pour saisir par l'arrière l'ouverture d'ancrage (3), et
- une articulation (10) à deux axes au moins qui relie, de façon articulée autour de deux axes au moins, la butée d'arrimage (6) à l'élément d'ancrage (7) en forme de crochet, dans laquelle l'articulation à deux axes au moins (10) présente un premier axe de pivotement (S₁) et un deuxième axe de pivotement (S₂), les deux axes de pivotement (S₁, S₂) passant orthogonalement l'un à l'autre,
**caractérisée en ce que** l'élément d'ancrage (7) en forme de crochet présente une section en forme d'arc (8) pour saisir par l'arrière l'ouverture d'ancrage (3) et une butée (9) avec une surface de butée plane (12), dans laquelle la butée (9) présente une extension longitudinale (L), dans laquelle l'extension longitudinale (L) passe essentiellement transversalement à la section en forme d'arc (8), dans laquelle la butée (9) dépasse le long de son extension longitudinale (L) de la section en forme d'arc (8), et la butée d'arrimage (6) est conçue comme un étrier essentiellement en forme de U avec deux parois latérales (17) et une surface de fond (18), dans laquelle le deuxième axe de pivotement (S₂) passe essentiellement perpendiculairement à la surface de fond (18).

2. Attache d'arrimage selon la revendication 1, **caractérisée en ce que** l'articulation (10) est conçue comme un joint à rotule.

3. Attache d'arrimage selon la revendication 1 ou 2, **caractérisée en ce que** l'articulation (10) comprend une tête d'articulation (11), dans laquelle la tête d'articulation (11) est conçue d'une seule pièce avec l'élément d'ancrage (7) en forme de crochet.

4. Attache d'arrimage selon au moins l'une des revendications 1 à 3, **caractérisée en ce que** la butée (9) est disposée à une extrémité de la section en forme d'arc (8).

5. Attache d'arrimage selon au moins l'une des revendications 1 à 4, **caractérisée en ce que** la surface de butée (12) est conçue bombée.

6. Attache d'arrimage selon au moins l'une des revendications 1 à 5, **caractérisée en ce que** le premier axe de pivotement (S₁) passe dans un premier sens parallèlement à l'extension longitudinale (L) de la butée (9) et le deuxième axe de pivotement (S₂) passe dans un deuxième sens perpendiculairement à l'extension longitudinale (L) de la butée (9).

7. Attache d'arrimage selon au moins l'une des revendications 1 à 6, **caractérisée en ce que** le premier axe de pivotement (S₁) passe à travers une première zone d'extrémité (15) de l'élément d'ancrage (7) en forme de crochet.

8. Attache d'arrimage selon au moins l'une des revendications 1 à 7, **caractérisée en ce que** la butée (9) est disposée sur une deuxième zone d'extrémité (16) de l'élément d'ancrage (7) en forme de crochet.

9. Utilisation d'une attache d'arrimage (1) selon l'une des revendications 1 à 8 pour ancrer un moyen d'arrimage (2) à une ouverture d'ancrage (3) qui est conçue dans une tôle perforée (4) d'une surface de chargement d'un véhicule utilitaire (5).

10. Utilisation selon la revendication 9, **caractérisée en ce que** pour ancrer le moyen d'arrimage (2) à l'ouverture d'ancrage (3), l'attache d'arrimage (1) est introduite dans l'ouverture d'ancrage (3) jusqu'à ce que la butée (9) saisisse par l'arrière un bord de l'ouverture d'ancrage (3).

11. Utilisation selon la revendication 10, **caractérisée en ce que** l'ouverture d'ancrage (3) est conçue comme un trou oblong et l'extension longitudinale (L) de la butée (9) correspond essentiellement à une extension longitudinale du trou oblong de l'ouverture d'ancrage (3).
